(19) Europäisches Patentamt / European Patent Office / Office européen des brevets

(11) **EP 4 585 637 A1**

(12) **EUROPEAN PATENT APPLICATION**
published in accordance with Art. 153(4) EPC

(43) Date of publication:
16.07.2025 Bulletin 2025/29

(21) Application number: 23863245.9

(22) Date of filing: 07.09.2023

(51) International Patent Classification (IPC):
C08J 5/00 (2006.01)   B29C 48/09 (2019.01)
F16L 11/06 (2006.01)   B29K 27/12 (2006.01)
B29L 23/00 (2006.01)

(52) Cooperative Patent Classification (CPC):
B29C 48/09; C08J 3/00; C08J 5/00; F16L 11/06;
F16L 11/12

(86) International application number:
PCT/JP2023/032680

(87) International publication number:
WO 2024/053707 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.09.2022 JP 2022143760

(71) Applicant: DAIKIN INDUSTRIES, LTD.
Osaka-shi, Osaka 530-0001 (JP)

(72) Inventors:
• IMAMURA, Hitoshi
  Osaka-Shi, Osaka 530-0001 (JP)
• HAMADA, Hiroyuki
  Osaka-Shi, Osaka 530-0001 (JP)
• MUKAI, Eri
  Osaka-Shi, Osaka 530-0001 (JP)
• FUJISAWA, Manabu
  Osaka-Shi, Osaka 530-0001 (JP)

(74) Representative: Hoffmann Eitle
Patent- und Rechtsanwälte PartmbB
Arabellastraße 30
81925 München (DE)

(54) **TUBE AND METHOD FOR PRODUCING TUBE**

(57)     Provided is a tube comprising a tetrafluoroethylene/fluoroalkyl vinyl ether copolymer, wherein
the copolymer has 500 or less functional groups per $10^6$ carbon atoms;
the copolymer has a melting point of 280 to 315°C;
the copolymer has a fluoroalkyl vinyl ether unit content of 3.0 to 12.0 mass% based on total monomer units;
the copolymer has a melt flow rate of 1 to 15 g/10 min;
the tube releases, from an inner surface thereof, 3500 or less particles per 1 $cm^2$ of the inner surface of the tube; and
an amount of total organic carbon eluted with water from the inner surface of the tube is 50 ng or less per 1 $cm^2$ of the inner surface of the tube.

Figure 2

EP 4 585 637 A1

**Description**

TECHNICAL FIELD

The present disclosure relates to a tube and a method for producing a tube.

BACKGROUND ART

Patent Document 1 discloses a method for producing a fluororesin tube with reduced particles, and it is a method for producing a fluororesin tube, the method comprising melting and extruding a fluororesin or a fluororesin-based resin mixture to mold it into a form of a tube, wherein after or during the molding of the tube, clean air is allowed to flow into the tube to purge particles from the inside of the tube.

Patent Document 2 discloses a method for producing a tube, comprising: extruding a melt-fabricable fluororesin from a mold of an extruder into a form of a tube, leading the extruded melt-fabricable fluororesin to a cooling device to cool the extruded melt-fabricable fluororesin, and winding a resulting cooled tube onto a winding reel using a winding device, wherein a gas is fed from a head end of the tube wound onto the winding reel into a hollow of the tube, the gas in the hollow is allowed to pass through a gas-introducing entrance of the mold and then through a gas-discharging hole of the mold to discharge the gas outside, thereby allowing the gas to flow along the hollow, and an internal pressure of the hollow is kept higher than atmospheric pressure and lower than 0.5 kgf/cm$^2$.

RELATED ART

PATENT DOCUMENTS

    Patent Document 1: JP2000-233435A
    Patent Document 2: WO2022/059501

SUMMARY OF THE INVENTION

PROBLEM TO BE SOLVED BY THE INVENTION

An object of the present disclosure is to provide a tube that has a reduced number of particles to be released from the inner surface of the tube and also a reduced amount of total organic carbon (TOC) to be eluted from the inner surface of the tube.

MEANS FOR SOLVING THE PROBLEM

According to the present disclosure, provided is a tube comprising a tetrafluoroethylene/fluoroalkyl vinyl ether copolymer, wherein

    the copolymer has 500 or less functional groups per 10$^6$ carbon atoms;
    the copolymer has a melting point of 280 to 315°C;
    the copolymer has a fluoroalkyl vinyl ether unit content of 3.0 to 12.0 mass% based on total monomer units;
    the copolymer has a melt flow rate of 1 to 15 g/10 minutes;
    the tube releases, from an inner surface thereof, 3500 or less particles per 1 cm$^2$ of the inner surface of the tube; and
    an amount of total organic carbon eluted with water from the inner surface of the tube is 50 ng or less per 1 cm$^2$ of the inner surface of the tube.

EFFECTS OF INVENTION

According to the present disclosure, there can be provided a tube that has a reduced number of particles to be released from the inner surface of the tube and also a reduced amount of total organic carbon (TOC) to be eluted from the inner surface of the tube.

BRIEF DESCRIPTION OF DRAWINGS

Figure 1 is a schematic cross-sectional view showing an embodiment of a tube with both ends thereof melt-sealed.
Figure 2 is a schematic side view of a tube-producing system.
Figure 3 is a schematic front view of a winding device.
Figure 4 is a systematic diagram of a system for use in measurement of the number of particles released from the inner surface of a tube.

DESCRIPTION OF EMBODIMENTS

Specific embodiments of the present disclosure will now be described in detail, but the present disclosure is not limited to the embodiments below.

Patent Document 1 discloses that clean air is fed, for purging, from a head end of an advanced tube into the tube. In the method disclosed in Patent Document 1, it is however difficult to remove contaminants that have adhered to the inner surface of the tube.

Then, Patent Document 2 suggests a method for producing a tube; wherein a gas is fed from the head end of the tube wound onto a winding reel into the hollow of the tube; the gas in the hollow is allowed to pass through a gas-introducing entrance of the mold and then through a gas-discharging hole of the mold to discharge the gas outside, thereby allowing the gas to flow along the hollow; and the internal pressure of the hollow is kept higher than atmospheric pressure and lower than $0.5$ kgf/$cm^2$. According to the method, a tube having a clean inner surface and excellent dimensional stability can be produced with high productivity.

A tube obtained by the production method disclosed in Patent Document 2 has very high cleanness. However, as a result of further examining the production methods, it has newly been found that it is possible to produce a tube that has a further reduced number of particles to be released from the inner surface of the tube and also a further reduced amount of total organic carbon (TOC) to be eluted from the inner surface of the tube.

Specifically, the tube of the present disclosure is a tube comprising a tetrafluoroethylene/fluoroalkyl vinyl ether copolymer, wherein the tube releases, from the inner surface thereof, 3500 or less particles per 1 $cm^2$ of the inner surface of the tube; and an amount of total organic carbon eluted with water from the inner surface of the tube is 50 ng or less per 1 $cm^2$ of the inner surface of the tube.

The tube of the present disclosure releases an extremely small number of particles from the inner surface of the tube. The number of particles to be released from the inner surface of the tube of the present disclosure is 3500 or less, preferably 3200 or less, more preferably 2500 or less, and still more preferably 2000 or less, per 1 $cm^2$ of the inner surface of the tube. The lower limit of the number of particles may be 1. In the present disclosure, the number of particles means the number of particles that have a diameter of 30 nm or more and are released from the inner surface of the tube with isopropyl alcohol (IPA) when IPA is allowed to flow in the tube at a flow rate of 110 mL/min.

The number of particles released from the inner surface of the tube is measured by the following method. This measurement method is a novel measurement method, and can measure the number of particles released from the inner surface of a tube with higher accuracy than conventional measurement methods.

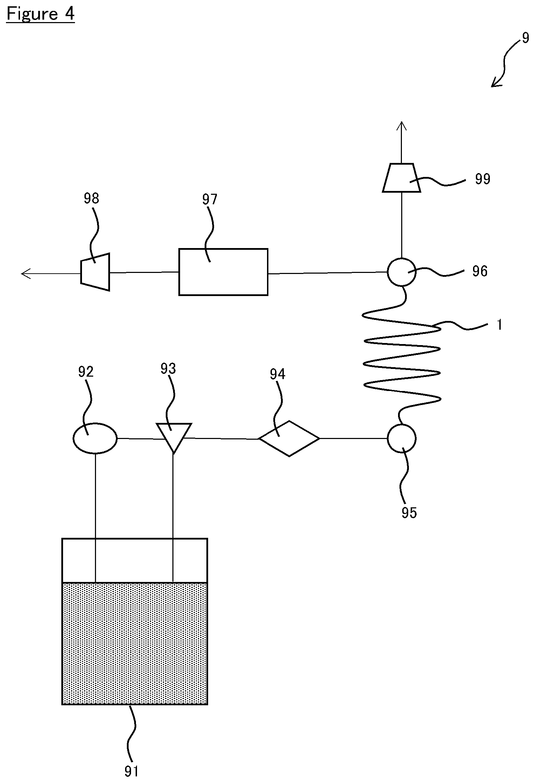

Figure 4 is a systematic diagram of a system used for measuring the number of particles released from the inner surface of a tube in the present disclosure. As shown in FIG. 4, the system 9 includes a solvent container 91, a filter 94, and a particle counter 97.

Isopropyl alcohol (IPA) is contained in the solvent container 91, and the solvent container 91 is connected to a joint 95 via a pump 92, a valve 93, and a filter 94. The joint 95 and the joint 96 are configured such that they can be connected to the tube 1 as a measurement target. IPA in the solvent container 91 passes through a filter 94 (filtration accuracy 3 nm) by a pump 92 and is fed to the tube 1 connected to the joint 95 and the joint 96. A portion or the whole of the IPA having passed through the tube 1 is introduced into the particle counter 97, and the number of particles in the solvent is measured.

In the system 9 shown in FIG. 4, a flowmeter 98 is installed downstream of the particle counter 97, and a predetermined amount of the IPA is introduced into the particle counter 97. The remaining IPA is discharged to the outside through a flowmeter 99 while the flow rate thereof is adjusted by a flow rate adjustment valve attached to the flowmeter 99. As the particle counter 97, a particle counter having a built-in flowmeter 98 may be used.

The number of particles released from the inner surface of the tube can be measured by the following method.

The system 9 shown in FIG. 4 is constructed, and the liquid-contact surfaces of the members constituting the system 9 are cleaned with IPA. Then the tube 1 as a measurement target is set on the upstream side of the particle counter;

the inner surface of the tube 1 is cleaned by allowing IPA to flow into the tube 1 while the number of particles having a diameter of 30 nm or more in the IPA used for cleaning the inner surface of the tube 1 is measured using a particle counter;

it is confirmed that the number of particles in IPA used for cleaning the inner surface of the tube 1 has become 10 or less per mL;

the feed of IPA into the tube 1 was stopped, and the tube 1 was left for 6 hours (room temperature, no pressure) while the tube 1 was filled with IPA;

the feed of IPA into the tube 1 is resumed, IPA is allowed to flow into the tube A at a flow rate of 110 mL/min, and the number of particles having a diameter of 30 nm or more in the IPA that has passed through the tube 1 is measured using a particle counter.

The amount of total organic carbon (TOC) eluted from the inner surface of the tube of the present disclosure is extremely small. The amount of total organic carbon (TOC) eluted with water from the inner surface of the tube of the present disclosure is 50 ng or less, preferably 47 ng or less, per 1 $cm^2$ of the inner surface of the tube. The lower limit of the amount of total organic carbon eluted may be 1 ng.

The amount of total organic carbon (TOC) eluted and released from the inner surface of the tube can be determined by allowing ultrapure water to flow in the tube and measuring the amount of TOC eluted with the ultrapure water that has passed through the tube using a TOC mater.

In one embodiment of the tube of the present disclosure, the amount of potassium, sodium, and iron eluted with an aqueous nitric acid solution from the inner surface of the tube is small. Air contains contaminants including potassium, sodium, and iron, and the contaminants may adhere to the inner surface of a tube if the air is introduced into the hollow formed when the tube is produced by extrusion using an extruder. The amount of potassium, sodium, and iron eluted is a measure for determining the degree of contamination of the inner surface of the tube with metal. The amount of potassium, sodium, and iron eluted with an aqueous nitric acid solution from the inner surface of the tube of the present disclosure is preferably 0.50 ng or less, and more preferably 0.45 ng or less. The lower limit of the amount of potassium, sodium, and iron eluted may be 0.01 ng.

The amount of potassium, sodium, and iron eluted with an aqueous nitric acid solution from the inner surface of the tube can be determined in the following manner: 15 mL of a 1N aqueous nitric acid solution was fed into the tube; the resulting tube was left for 3 days; the aqueous nitric acid solution was collected; and the contents of potassium, sodium and iron in the collected aqueous nitric acid solution were measured by inductively coupled plasma mass spectrometry.

In one embodiment of the tube of the present disclosure, the tube has a small metal content, as measured by an ashing method. The metal content of the tube of the present disclosure is preferably 40 ng/1 g or less, more preferably 30 ng/1 g or less, and preferably 1 ng/g or more, as measured by an ashing method. The lower limit of the metal content may be 1 ng/1 g, as measured by an ashing method.

In the present disclosure, the metal content measured by an ashing method is the total metal content of Fe, Cr, Ni, Cu, Al, Na, Mg, and K. The metal content in the present disclosure includes the amount of the metal components contained in the body of the tube in addition to the amount of the metal components present on the surface of the tube. In the vicinity of the surface in contact with a chemical solution, the vicinity extending over a depth of several nanometers to several microns, there are minute voids in molecular size into which molecules of the chemical solution can penetrate. Accordingly, metal contained in the resin body that cannot be detected by an analysis method for an amount of metal eluted in a short-term may be eluted within a long period of time, even if it is a trace amount of a metal component contained in the body of the tube. When the metal content of the tube as measured by an ashing method is within the above-described range, adverse effects due to dissolution of trace amounts of metal components contained in the body of the tube can be reduced.

The metal content of the tube can be measured by the following method, for example: the tube is cut to a length of about 5 cm; the surface of the tube is cleaned with a 1N aqueous nitric acid solution; the tube is then scraped; the scraped material is ashed in a cuvette in an atomization unit of an atomic absorption spectrophotometer; and the metal content is measured using the atomic absorption spectrophotometer. Alternatively, the following method can be used: the scraped material prepared in the same manner as above is weighed into a platinum crucible and ashed using a gas burner or an electric furnace, the resulting ash is dissolved in acid; and the metal content is measured using an ICP emission analyzer or a frameless atomic absorption spectrophotometer.

In one embodiment of the tube of the present disclosure, the inner surface of the tube has a small surface roughness Ra. The surface roughness Ra of the inner surface of the tube of the present disclosure is preferably 5.0 nm or less, more preferably 4.0 nm or less, still more preferably 3.0 nm or less, and even more preferably 2.9 nm or less. The lower limit of the surface roughness Ra of the inner surface may be 0.1 nm. When the surface roughness Ra of the inner surface of the tube is within the range described above, the tube can have a smaller number of particles to be released from the inner surface of the tube and also a smaller amount of total organic carbon (TOC) to be eluted from the inner surface of the tube. The surface roughness Ra of the inner surface of the tube can be controlled by, for example, appropriately selecting the kind of the FAVE unit of the TFE/FAVE copolymer or appropriately adjusting the FAVE unit content.

The surface roughness Ra of the inner surface of the tube can be measured using an atomic force microscopy (AFM).

Next, the copolymer forming the tube of the present disclosure will be described.

The tube of the present disclosure includes a tetrafluoroethylene (TFE)/fluoroalkyl vinyl ether (FAVE) copolymer.

The FAVE can include at least one selected from the group consisting of: a monomer represented by the general formula (1):

$$CF_2=CFO(CF_2CFY^1O)_p\text{-}(CF_2CF_2CF_2O)_q\text{-}Rf \qquad (1)$$

wherein $Y^1$ represents F or $CF_3$, and Rf represents a perfluoroalkyl group having 1 to 5 carbon atoms, p represents an integer of 0 to 5, and q represents an integer of 0 to 5; and
a monomer represented by the general formula (2):

$$CFX=CXOCF_2OR^1 \qquad (2)$$

wherein X are the same or different from each other and each represent H, F or $CF_3$, and $R^1$ represents a linear or branched fluoroalkyl group having 1 to 6 carbon atoms and optionally containing 1 to 2 atoms of at least one selected from the group consisting of H, Cl, Br and I, or a cyclic fluoroalkyl group having 5 or 6 carbon atoms and optionally containing 1 to 2 atoms of at least one selected from the group consisting of H, Cl, Br and I.

Among others, the FAVE is preferably the monomer represented by the general formula (1), more preferably at least one selected from the group consisting of perfluoro(methyl vinyl ether), perfluoro(ethyl vinyl ether) (PEVE), and perfluoro(propyl vinyl ether) (PPVE), even more preferably at least one selected from the group consisting of PEVE and PPVE, and particularly preferably PPVE.

The copolymer is preferably a melt-fabricable fluororesin. In the present disclosure, the term "melt-fabricable" means that it is possible to melt and fabricate the polymer using a conventional processing device, such as an extruder or an injection molding machine. Accordingly, the melt-fabricable fluororesin usually has a melt flow rate of 0.01 to 500 g/10 min as measured by the measurement method described later.

The copolymer has a FAVE unit content of 3.0 to 12.0 mass%, preferably 3.5 mass% or more, more preferably 4.0 mass% or more, even more preferably 4.5 mass% or more, and preferably 10.0 mass% or less, more preferably 8.0 mass% or less, even more preferably 7.0 mass% or less, still more preferably 6.5 mass% or less, particularly preferably 6.0 mass% or less, based on total monomer units.

The copolymer preferably has a TFE unit content of 88.0 to 97.0 mass%. The TFE unit content is more preferably 90.0 mass% or more, even more preferably 92.0 mass% or more, still more preferably 93.0 mass% or more, particularly preferably 93.5 mass% or more, most preferably 94.0 mass% or more, and more preferably 96.5 mass% or less, even more preferably 96.0 mass% or less, still more preferably 95.5 mass% or less, based on total monomer units.

The copolymer may include a monomer unit derived from a monomer copolymerizable with TFE and FAVE.

Examples of the monomer copolymerizable with TFE and FAVE include hexafluoropropylene (HFP); a vinyl monomer represented by $CZ^3Z^4=CZ^5(CF_2)_nZ^6$ (wherein $Z^3$, $Z^4$, and $Z^5$ are the same or different from each other and represent H or F; $Z^6$ represents H, F, or Cl; and n represents an integer of 2 to 10), and an alkyl perfluorovinyl ether derivative represented by $CF_2=CF\text{-}OCH_2\text{-}Rf^7$ (wherein $Rf^7$ represents a perfluoroalkyl group having 1 to 5 carbon atoms). Among these, HFP is preferable.

The content of the monomer unit(s) derived from the monomer copolymerizable with TFE and FAVE is preferably 0 to 9.0 mass%, more preferably 7.5 mass% or less, even more preferably 1.0 mass% or less.

The copolymer is preferably at least one selected from the group consisting of a copolymer consisting of a TFE unit and a FAVE unit, and a TFE/HFP/FAVE copolymer, and more preferably the copolymer consisting of a TFE unit and a FAVE unit.

The copolymer has a melt flow rate (MFR) of preferably 0.5 to 100 g/10 min, more preferably 1 g/10 min or more, even more preferably 2 g/10 min or more, and more preferably 50 g/10 min or less, even more preferably 40 g/10 min or less, still more preferably 15 g/10 min or less.

The MFR is measured under a load of 5 kg at 372°C using a die having a diameter of 2.1 mm and a length of 8 mm, in accordance with ASTM D-1238.

The copolymer has a melting point of 280 to 315°C, preferably 285°C or higher, more preferably 290°C or higher, and preferably 310°C or lower.

The melting point is a temperature corresponding to the maximum value in the heat-of-fusion curve when raising the temperature at a rate of 10°C/min using a differential scanning calorimeter (DSC).

The copolymer has 500 or less functional groups per $10^6$ carbon atoms, and preferably has 300 or less, more preferably 200 or less, even more preferably 100 or less, still more preferably 50 or less, and particularly preferably 10 or less functional groups, per $10^6$ carbon atoms.

In order to ensure the number of functional groups of the copolymer within the above-described range, fluorination treatment, which will be described later, is generally needed. Through subjecting the copolymer to the fluorination treatment, a tube can be easily produced that has a reduced number of particles to be released from the inner surface thereof and also a reduced amount of total organic carbon (TOC) to be eluted from the inner surface thereof, thought the reason for this is not clear. Accordingly, for reducing the number of particles released from the inner surface of the tube and also the amount of total organic carbon (TOC) eluted from the inner surface of the tube, it is important to ensure that the number of functional groups of the copolymer included in the tube of the present disclosure falls within the above-described range.

The above-described functional groups include a functional group present at a terminal of the main chain or that at a terminal of a side chain in the copolymer, and a functional group present in the main chain or that in the side chain. The functional group is preferably at least one selected from the group consisting of $-CF=CF_2$, $-CF_2H$, $-COF$, $-COOH$, $-COOCH_3$, $-CONH_2$, and $-CH_2OH$.

Infrared spectroscopy can be used for the characterization of the kinds of the functional groups and the determination of the number of the functional groups.

Specifically, the number of the functional groups is determined by the following method. First, the copolymer is melted at 340 to 350°C for 30 minutes, and compression-molded to prepare a film having a thickness of 0.05 to 0.25 mm. The film is analyzed by Fourier-transform spectroscopy to obtain an infrared absorption spectrum of the TFE/FAVE copolymer, and a difference spectrum between the resulting spectrum and a base spectrum of a completely fluorinated copolymer with no functional group is obtained. From absorption peaks of specific functional groups exhibited in the difference spectrum, the number of the functional groups per $1 \times 10^6$ carbon atoms of the copolymer, N, is calculated using the following equation (A).

$$N = I \times K/t \quad (A)$$

I: Absorbance
K: Correction factor
t: Thickness of film (mm)

For reference, Table 1 shows the absorption frequency, the molar absorption coefficient, and the correction factor of the functional groups in the present disclosure. These molar absorption coefficients are those determined from FT-IR data of model compounds with a low molecular weight.

[Table 1]

**Table 1**

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH_2$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF=CF_2$ | 1795 | 635 | 366 | $CF_2=CF_2$ |

The absorption frequencies of $-CH_2CF_2H$, $-CH_2COF$, $-CH_2COOH$, $-CH_2COOCH_3$, and $-CH_2CONH_2$ are lower than the absorption frequencies of $-CF_2H$, -COF, -COOH free and -COOH bonded, $-COOCH_3$, and $-CONH_2$, respectively, which are shown in the table, by tens of kayser ($cm^{-1}$).

Accordingly, the number of, for example, the functional groups -COF is the total of the number of the functional groups determined from the absorption peak at an absorption frequency of 1883 $cm^{-1}$, which are assigned to $-CF_2COF$,

and the number of the functional groups determined from the absorption peak at an absorption frequency of 1840 cm$^{-1}$, which are assigned to -CH$_2$COF.

The number of the functional groups may be the total number of -CF=CF$_2$, -CF$_2$H, -COF, -COOH, -COOCH$_3$, -CONH$_2$, and -CH$_2$OH.

The tube of the present disclosure may include a fluororesin other than the TFE/FAVE copolymer. The fluororesin other than the TFE/FAVE copolymer may be polytetrafluoroethylene, for example. The content of the polytetrafluoroethylene may be 0.001 to 50 mass%, and may be 0.001 to 1 mass%, based on the TFE/FAVE copolymer.

The polytetrafluoroethylene may be a polytetrafluoroethylene that has a crystallization temperature of 305°C or higher as measured using a differential scanning calorimeter (DSC). The heat of crystallization of the polytetrafluoroethylene may be 50 J/g. When the tube of the present disclosure includes such a polytetrafluoroethylene, the tube can have a smoother inner surface. The crystallization temperature of the polytetrafluoroethylene is more preferably 310°C or higher, even more preferably 312°C or higher.

In one embodiment, both ends of the tube of the present disclosure are each melt-sealed. Due to the both ends melt-sealed, the cleanness of the inner surface of the tube can be maintained.

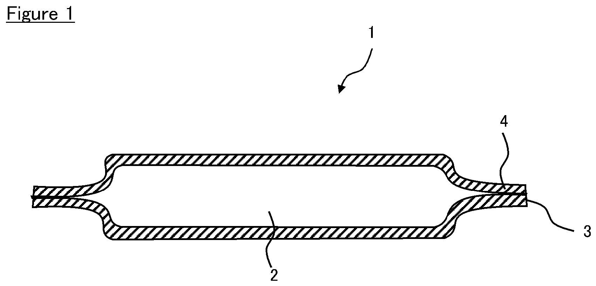

Figure 1 is a schematic cross-sectional view showing an embodiment of a tube 1 with both ends thereof melt-sealed. In the tube 1 shown in Figure 1, melt-sealed portions 4 are formed around the respective cut surfaces 3, which are exposed on the both ends, and the hollow 2 of the tube 1 is thus sealed.

In one embodiment of the tube of the present disclosure, both ends thereof are melt-sealed, and gas that has passed through a filter is filled in the hollow. Due to gas with high cleanness filled in the tube, the high cleanness of the inner surface of the tube can be maintained for a long period of time.

The outer diameter of the tube is not limited, and may be 2 to 100 mm, 3 to 100 mm, or 5 to 50 mm. The thickness of the tube may be 0.1 to 10 mm, or 0.3 to 5 mm.

The tube of the present disclosure can be suitably used as a tube for piping a chemical solution, which is for allowing a chemical solution to flow, and can be particularly suitably used as a tube for piping a chemical solution that is used for transferring a chemical solution with high purity for producing semiconductor devices.

In a semiconductor plant, many tubes are used for allowing ultrapure water and chemical solutions with high purity to flow to be used for producing semiconductor devices. The inner surface of the tube may be contaminated with contaminants such as fine particles present in air and polymer fumes generated upon the melt-molding of the TFE/FAVE copolymer. Particularly, nanosized contaminants adhere to the inner surface of the polymer due to Van der Waals force, an electrostatic force, or the like, and it is thus difficult to remove them with rinse water such as pure water. Accordingly, when a new tube is used in a semiconductor plant, large amounts of ultrapure water and chemical solutions and long time for cleaning are disadvantageously necessary for cleaning (brushing) the inside of the tube, for example.

Since the tube of the present disclosure has the above-described configuration, almost no contaminants adhere to the inner surface thereof, and the tube is unlikely to contaminate ultrapure water and chemical solutions with high purity used for producing semiconductor devices. Since the tube of the present disclosure exhibits such an effect, the tube is preferably a tube for piping a chemical solution for allowing the chemical solution to flow. The chemical solution may be a chemical solution used for producing semiconductors, and examples of the chemical solution include ammonia water, ozone water, hydrogen peroxide water, hydrochloric acid, sulfuric acid, a resist solution, a thinner solution, and a developer.

The tube of the present disclosure can be utilized as a tube for use in equipment for producing semiconductors or devices for producing semiconductors, including a chemical solution-feeding line for producing semiconductors, chemical solution-feeding equipment for producing semiconductors, a semiconductor-cleaning device, and a coater/developer. A chemical solution with high purity can be surely fed to a site of use, by using the tube of the present disclosure for equipment for producing semiconductors or devices for producing semiconductors. Even when producing semiconductor devices with a line width of 5 nm or less, use of the tube of the present disclosure can reduce defect and fault in the semiconductor devices due to particles or metal contaminants, so that improvement in the yield can be expected in production of semiconductor devices.

The tube of the present disclosure can be suitably produced by the production method of the present disclosure. The production method of the present disclosure will now be described.

In the production method of the present disclosure, the TFE/FAVE copolymer as described above is subjected to fluorination treatment, and then the fluorinated copolymer is extruded using an extruder to thereby produce a tube.

The fluorination treatment can be carried out by contacting, with a fluorine-containing compound, a copolymer that has not been subjected to a fluorination treatment. Through subjecting the copolymer to the fluorination treatment, a tube can be produced that has a reduced number of particles to be released from the inner surface thereof and also a reduced amount of total organic carbon (TOC) to be eluted from the inner surface thereof. The reason for this is not clear, but the following is inferred: when the copolymer is extruded after fluorination treatment, generation of volatile components from the copolymer by heating during extrusion is suppressed; accordingly, the number of particles and organic matters generated that may adhere to the inner surface of the tube is reduced; and also, the reduction in the number of the particles and organic matters generated leads to remarkably improved efficiency in discharging the particles and organic matters by gas flowing in the tube.

A functional group is introduced into the copolymer by, for example, the chain transfer agent or the polymerization initiator used in the production of the copolymer. For example, in a case where alcohol is used as the chain transfer agent or a case where a peroxide having a structure -CH$_2$OH is used as the polymerization initiator, -CH$_2$OH is introduced into the terminal of the main chain of the copolymer. In a case where a monomer having a functional group is polymerized, the functional group is introduced into the terminal of the side chain of the copolymer.

By subjecting such a copolymer having a functional group to fluorination treatment, a copolymer having a number of functional groups within the range as described above can be obtained. In other words, the TFE/FAVE copolymer is preferably obtained through fluorination treatment. Also, the TFE/FAVE copolymer preferably has a terminal group -CF$_3$.

The fluorine-containing compound is not limited, and may be a fluorine radical source that generates a fluorine radical under the conditions of the fluorination treatment. Examples of the fluorine radical source include F$_2$ gas, CoF$_3$, AgF$_2$, UF$_6$, OF$_2$, N$_2$F$_2$, CF$_3$OF, and a halogen fluoride (e.g., IF$_5$, ClF$_3$).

The fluorine radical source, such as F$_2$ gas, may be that having a concentration of 100%; however, the fluorine radical source is preferably mixed with an inert gas to dilute to 5 to 50 mass%, and more preferably 15 to 30 mass%, before use, from a safety viewpoint. Examples of the inert gas include nitrogen gas, helium gas, and argon gas, and nitrogen gas is preferable from an economical viewpoint.

The conditions of the fluorination treatment are not limited. A copolymer in a melted state may be brought into contact with the fluorine-containing compound; however, the fluorination treatment can generally be carried out at a temperature equal to or lower than the melting point of the copolymer, preferably 20 to 220°C, more preferably 100 to 200°C. The fluorination treatment can be carried out generally for 1 to 30 hours, preferably 5 to 25 hours. The fluorination treatment is preferably carried out by contacting, with fluorine gas (F$_2$ gas), a copolymer that has not been subjected to fluorination treatment.

The TFE/FAVE copolymer can be produced by, for example, a conventionally known method, and specifically, by appropriately mixing monomers serving as constituent units thereof and additives such as a polymerization initiator and carrying out emulsion polymerization or suspension polymerization, for example.

When the TFE/FAVE copolymer is produced, it is preferable to bring starting materials used for production and the copolymer into as little contact as possible with the metal surfaces of the equipment and pipes in the steps of the method for producing the copolymer, including the polymerizing step, the granulating step, the cleaning step, the drying step, the transferring step, the storing step, the pelletizing step, the fluorinating step, and the step of filling the product, and it is also preferable to use materials having small metal contents as the starting materials used for production. Furthermore, it is also preferable to use dried clean air as air for use in drying the resulting copolymer and air for use in transferring the copolymer from equipment to the other equipment. Such a production method allows for production of a copolymer having a small metal content as measured by an ashing method. Accordingly, a tube having a small metal content as measured by an ashing method can be obtained by using such a copolymer.

In the production method of the present disclosure, when the copolymer is extruded, gas that has passed through an organic matter-removing filter and then a fine particle-removing filter is allowed to flow into the tube from the head end thereof. By such gas flowing into the tube from the head end thereof, contaminants contained in the hollow of the tube can be discharged from the hollow. Also, when the gas is allowed to flow into the tube, no organic matters or fine particles adhered to the inner surface of the tube since organic matters and fine particles have been removed from the gas fed into the tube. Furthermore, since the gas fed from the head end of the tube is discharged outside through the mold of the extruder, metal components generated from the mold do not adhered to the inner surface of the tube. Thus, by using the production method of the present disclosure, a tube can be produced that has a reduced number of particles to be released from the inner surface of the tube and also a reduced amount of total organic carbon (TOC) to be eluted from the inner surface of the tube. Furthermore, by using the production method of the present disclosure, a tube can be produced that has a small amount of potassium, sodium, and iron to be eluted. Also, a tube having a small metal content as measured by an ashing method, and a tube having a small surface roughness Ra of the inner surface thereof can be produced.

As the filter for filtering out organic matters, a filter of chemical adsorption type utilizing hydrogen bonds or acid/base bonds, or a filter of physical adsorption type utilizing a van der Waals force can be used, for example. Among others, the filter for filtering out organic matters is preferably the filter of physical adsorption type. By using the filter of physical adsorption type, organic matters including plasticizers and oil mist present in gas can be removed at high efficiency.

As the filter for filtering out organic matters, one or more types of filters can be used. A plurality of the filters for organic matters may be connected in series or in parallel.

A filter having a column filled with adsorbent can be used as the filter for filtering out organic matters. For example, activated carbon, silica gel, or zeolite can be used as the adsorbent.

The adsorbent is preferably activated carbon. The activated carbon may be granular activated carbon or fibrous activated carbon. The activated carbon preferably has a small content of metal components. Examples of the activated carbon include those from coconut shell, coal, or charcoal as a starting material, and plant-derived activated carbon is preferable.

The activated carbon preferably has a larger specific surface area as measured by the BET method, and the specific surface area is preferably 400 $m^2/g$ or more, and more preferably 1000 $m^2/g$ or more.

In the production method of the present disclosure, the gas is allowed to pass through the organic matter-removing filter, and then pass through the fine particle-removing filter, and is then fed into a tube. Even if the fine particles generated from the organic matter-removing filter contaminate into the gas, the generated fine particles are collected by the fine particle-removing filter when feeding the gas by such a method, and the fine particles can thus be prevented from entering the tube. In contrast, if gas is allowed to pass through the fine particle-removing filter and then pass through the organic matter-removing filter, and is then fed into a tube, introduction of the fine particles into the tube cannot be prevented, and the fine particles may adhere to the inner surface of the tube.

The fine particle-removing filter preferably has a filtration accuracy for fine particles of 30 nm or less, more preferably 10 nm or less, even more preferably 5 nm or less, particularly preferably 3 nm or less, and preferably 1 nm or more.

The collection efficiency of the fine particle-removing filter is not limited. The fine particle-removing filter is preferably a filter that collects 99.99% or more of particles of 30 nm or more, more preferably a filter that collects 99.99% or more of particles of 10 nm or more, even more preferably a filter that collects 99.99% or more of particles of 5 nm or more, and particularly preferably a filter that collects 99.99% or more of particles of 3 nm or more.

As the fine particle-removing filter, one or more types of filters can be used. A plurality of fine particle-removing filters may be connected in series or in parallel.

Next, the production method of the present disclosure will be described in more detail with reference to the drawings.

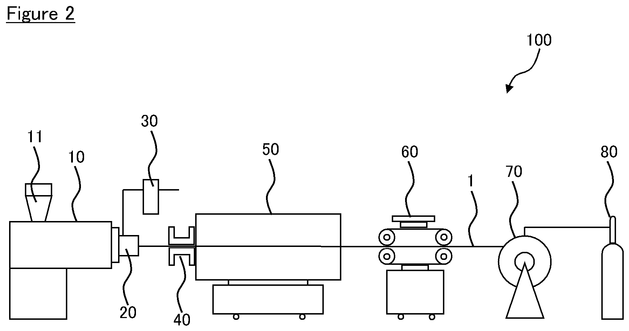

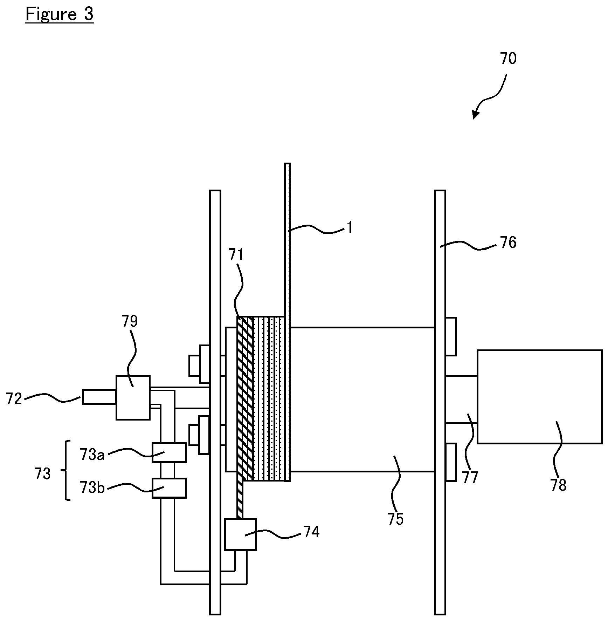

Figure 2 is a schematic side view of a tube-producing system, and Figure 3 is a schematic front view of a winding device.

The tube-producing system 100 shown in Figure 2 includes: an extruder 10 configured to melt and extrude a copolymer into the form of a tube; a sizing die 40 configured to define the outer diameter of the extruded tube in a melted state; a cooling water pool 50 configured to cool the tube in the melted state to solidify the tube; a drawing machine 60 configured to draw the cooled tube; a winding device 70 configured to wind the tube advanced from the drawing machine; and a gas-feeding device 80 configured to feed a gas to the winding device 70.

In the tube-producing system 100, a copolymer fed from a hopper 11 of the extruder 10 is melted in a cylinder of the extruder 10, and by rotation of a screw, the melted copolymer is extruded from the mold 20 into the form of a tube. The extruded copolymer in the form of a tube in a melted state passes through the sizing die 40 to define the external profile thereof. The copolymer that has passed through the sizing die 40 is cooled in the cooling water pool 50, then passes through the drawing machine 60 configured to draw the cooled tube of the copolymer, and wound by the winding device 70 onto a winding reel 75 included in the winding device. At this time, the drawing speed (line speed) is generally 30 to 150 cm/min, and may be 30 to 120 cm/min.

In one embodiment of the production method of the present disclosure, a tube is produced in the following manner: the copolymer is melted and extruded into the form of a tube from a mold provided in an extruder; the copolymer extruded into the form of a tube from the mold provided in the extruder is introduced into to a cooling device to be cooled; and the cooled tube is then wound around a winding reel using a winding device. Further, gas is fed to the hollow of the tube from the head end of the tube wound on the winding reel, and the gas in the hollow is discharged to the outside from the gas-introducing entrance provided in the mold through the gas-discharging hole provided in the mold. By thus feeding gas from the head end of the tube toward to the mold of the extruder, a tube can be produced that has a reduced number of particles to be released from the inner surface of the tube and also a reduced amount of total organic carbon (TOC) to be eluted from the inner surface of the tube.

In one embodiment of the production method of the present disclosure, the gas is fed into the tube at a pressure capable of preventing adhesion of contaminants to the inner surface of the tube while preventing deformation of the tube. The internal pressure (gauge pressure) in the tube is preferably higher than atmospheric pressure and lower than 0.5 kgf/$cm^2$. The internal pressure (gauge pressure) in the tube is preferably 0.4 kgf/$cm^2$ or less, more preferably 0.3 kgf/$cm^2$ or less, and preferably 0.1 kgf/$cm^2$ or more, more preferably 0.2 kgf/$cm^2$ or more.

The extruder shown in FIG. 2 includes the mold 20, and the copolymer in a melted state is extruded from an extrusion port provided in the mold 20. The temperature of the copolymer when extruded from the mold of the extruder is preferably 390°C or lower, more preferably 385°C or lower, even more preferably 380°C or lower, still more preferably 375°C or lower, particularly preferably 370°C or lower, most preferably 365°C or lower, and preferably equal to or higher than the melting point of the copolymer, more preferably 330°C or higher, even more preferably 350°C or higher.

The temperature of the copolymer when extruded from the mold of the extruder can be determined by measuring the temperature of the copolymer at the extrusion port of the mold with a thermocouple. When the temperature of the copolymer when extruded from the mold is lower, a tube can be obtained that has a highly reduced number of particles to be released from the inner surface thereof and also a highly reduced amount of total organic carbon (TOC) to be eluted from the inner surface thereof.

The extruder 10 further includes a back-flow prevention device 30. The back-flow prevention device 30 is connected to the gas-discharging hole of the mold 20 to discharge the gas to the outside of the extruder 10 and also to prevent the back-flow of the gas. Since the back-flow of the gas is prevented, the air does not flow into the resulting tube extruded from the extruder 10. Accordingly, contaminants in the air do not adhere to the inner surface of the tube even after the feed of the gas from the head end of the tube is stopped, and the clean inner surface is thus maintained.

The tube-producing system 100 includes a winding device 70. Figure 3 is a view showing an embodiment of the winding device 70. The winding device 70 shown in Figure 3 is a winding device for winding the tube 1 and includes: a gas-feeding inlet 72 configured to feed a gas into the hollow of the tube 1; a filter 73 provided downstream of the gas-feeding inlet 72 and configured to remove contaminants in the gas fed from the gas-feeding inlet 72; a tube-connecting port 74 provided downstream of the filter 73 and configured to connect the tube 1 thereto; and a winding reel 75 configured to wind the tube thereon.

The winding reel 75 is rotatably supported on a rotation axis 77 provided on a supporting column 76 of a supporting mount, and when an actuating device 78 is actuated, the winding reel 75 rotates with the rotation axis 77 to wind the tube 1. One end of the tube 1 is connected to the tube-connecting port 74 via a lead tube 71. The gas is fed from the tube-connecting port 74 into the hollow of the tube 1. The tube 1 is wound onto the winding reel 75 while the gas is allowed to flow into the hollow.

The gas-feeding inlet 72 is connected to a gas-feeding device 80. The gas-feeding device 80 may be a gas cylinder filled with a high-pressure gas, as shown in Figure 2, or may be a compressor, a blower, or the like. The gas-feeding device 80 may be provided with a needle valve (not shown) to adjust the pressure of the gas fed.

The tube-connecting port 74 is connected to the gas-feeding inlet 72 via the filter 73. The gas that has passed through the filter 73 can be fed into the hollow of the tube 1 to thereby produce a tube having a clean inner surface.

The kind of the gas fed into the hollow of the tube 1 is not limited, and may be, for example, an inert gas, such as nitrogen gas, argon gas, or helium gas, air, oxygen gas, or halogen gas. Air is preferable in view of reduction in cost.

In Figure 3, the organic matter-removing filter 73a and the fine particle-removing filter 73b are provided and linked to each other in series. Although the number of filters provided is one for each of the organic matter-removing filter and the fine particle-removing filter in Figure 3, a plurality of filters may be provided for each. For example, a plurality of fine particle-removing filters having different filtration accuracies for fine particles can be provided such that the gas that has passed through the organic matter-removing filter passes through the plurality of fine particle-removing filters.

The winding device 70 further includes a lead tube 71 with one end connected to the tube-connecting port 74 and the other end connected to the tube 1. The gas is fed into the hollow of the lead tube 71 from the tube-connecting port 74, and the gas is also fed into the hollow of the tube 1 connected to the lead tube 71.

In the winding device 70 shown in Figure 3, one end of the lead tube 71 is connected to the tube 1; however, the one end of the lead tube 71 is not connected to the tube 1 before the start of the extrusion of the copolymer. While the gas is fed into the lead tube 71 to flow out from the head end of the lead tube 71, the head end of the lead tube 71 is connected to the head end of the copolymer extruded from the mold 20 to feed the gas into the hollow of the tube 1 in a melted state. After the head end of the lead tube 71 is connected to the head end of the copolymer extruded from the mold 20, continuous extrusion of the copolymer from the mold 20 and the winding of the lead tube 71 and the cooled tube 1 are started. In this way, a tube with its inner surface kept clean can be produced.

When a tube having a desired length has been produced, the extrusion of the copolymer and the winding of the tube are stopped. After stopping the extrusion of the copolymer, the tube can be melt-sealed and cut at two arbitrary point therein, to thereby produce a tube with both ends thereof sealed, the hollow of the tube being filled with a gas that has passed through filters. The inner surface of the tube obtained by such a production method is extremely clean since it has never been brought into contact with air.

The position of the melt-sealed point in the tube is not limited. For example, the tube can be melt-sealed at a point between the mold 20 and the sizing die 40, and also melt-sealed at another point near the connection to the lead tube 71, so that the tube can be produced without waste. When the tube is in a melted state at the point where the tube is to be melt-sealed, the tube can be nipped with tweezers or the like to be melt-sealed. If the tube has been cooled and solidified at the point where the tube is to be melt-sealed, the tube can be heated with a heat gun or the like to melt selectively at the point to be melt-sealed, and the tube can be nipped with tweezers or the like at this point to achieve melt-sealing.

Although embodiments have been described as above, it will be appreciated that various modifications may be made on the modes and details without departing from the spirit and scope of the claims.

<1> According to the first aspect of the present disclosure, there is provided a tube comprising a tetrafluoroethylene/-fluoroalkyl vinyl ether copolymer, wherein

the copolymer has 500 or less functional groups per $10^6$ carbon atoms;

the copolymer has a melting point of 280 to 315°C;
the copolymer has a fluoroalkyl vinyl ether unit content of 3.0 to 12.0 mass% based on total monomer units;
the copolymer has a melt flow rate of 1 to 15 g/10 minutes;
the tube releases, from an inner surface thereof, 3500 or less particles per 1 $cm^2$ of the inner surface of the tube; and
an amount of total organic carbon eluted with water from the inner surface of the tube is 50 ng or less per 1 $cm^2$ of the inner surface of the tube.

<2> According to the second aspect of the present disclosure, there is provided the tube according to the first aspect, wherein the copolymer has a fluoroalkyl vinyl ether unit content of 3.5 to 8.0 mass% based on total monomer units.
<3> According to the third aspect of the present disclosure, there is provided the tube according to the first or second aspect, wherein the copolymer has 100 or less functional groups per $10^6$ carbon atoms.
<4> According to the fourth aspect of the present disclosure, there is provided the tube according to any of the first to third aspects, wherein an amount of potassium, sodium, and iron eluted with an aqueous nitric acid solution from the inner surface of the tube is 0.50 ng or less per 1 $cm^2$ of the inner surface of the tube.
<5> According to the fifth aspect of the present disclosure, there is provided the tube according to any of the first to fourth aspects, wherein the tube has a metal content of 40 ng/g or less, as measured by an ashing method.
<6> According to the sixth aspect of the present disclosure, there is provided the tube according to any of the first to fifth aspects, wherein the inner surface of the tube has a surface roughness Ra of 5.0 nm or less.
<7> According to the seventh aspect of the present disclosure, there is provided the tube according to any of the first to sixth aspects, wherein both ends of the tube are melt-sealed.
<8> According to the eighth aspect of the present disclosure, there is provided a method for producing a tube, comprising: subjecting a copolymer to fluorination treatment; and then extrusion forming the copolymer subjected to the fluorination treatment using an extruder, wherein

the copolymer is a tetrafluoroethylene/fluoroalkyl vinyl ether copolymer;
the copolymer has a melting point of 280 to 315°C;
the copolymer has a fluoroalkyl vinyl ether unit content of 3.0 to 12.0 mass% based on total monomer units;
the copolymer has a melt flow rate of 1 to 15 g/10 minutes;
the copolymer when extruded from a mold of the extruder has a temperature of 390°C or less; and
in the extrusion forming, a gas is allowed to flow in the tube from a head end of the tube, wherein the gas has passed through an organic matter-removing filter and then through a fine particle-removing filter.

<9> According to the ninth aspect of the present disclosure, there is provided the method according to the eighth aspect, wherein a column filled with active carbon is used as the organic matter-removing filter, wherein the active carbon has a specific surface area of 400 $m^2$/g or more as measured by a BET method.
<10> According to the tenth aspect of the present disclosure, there is provided the method according to the eighth or ninth aspect, wherein the fine particle-removing filter has a filtration accuracy for fine particles of 10 nm or less.

EXAMPLES

Embodiments of the present disclosure will now be described by way of examples, but the present disclosure is not limited only to the examples at all.
In Examples, the numerical values were obtained by measurements by the following methods.

(Composition)

The composition was determined by the $^{19}$F-NMR method.

(Melt flow rate (MFR))

The MFR was determined by measuring the mass (g/10 min) of the copolymer flow out from a nozzle with an inner diameter of 2.1 mm and a length of 8 mm at 372°C under a load of 5 kg over 10 minutes, using a melt indexer (manufactured by YASUDA SEIKI SEISAKUSHO, LTD.,) in accordance with ASTM D1238.

(Melting point)

The melting point was determined as a temperature corresponding to the maximum value in the heat-of-fusion curve when raising the temperature at a rate of 10°C/min using a differential scanning calorimeter (DSC).

(Number of functional groups)

The copolymer was melted at 340 to 350°C for 30 minutes and subjected to compression molding to prepare a film having a thickness of 0.05 to 0.25 mm. The film was analyzed by scanning 40 times using a Fourier transform infrared spectrophotometer [FT-IR (Spectrum One, manufactured by PerkinElmer)], to obtain an infrared absorption spectrum, and a difference spectrum between it and a base spectrum of a fully fluorinated copolymer, which had no functional group, was obtained. From the absorption peak of the specific functional group appearing in this difference spectrum, the number of the functional groups per $1 \times 10^6$ carbon atoms, N, of the sample was calculated using the formula (A) below.

$$N = I \times K / t \qquad (A)$$

I: Absorbance

K: Correction coefficient

t: Thickness of film (mm)

For reference, the absorption frequency, the molar absorption coefficient, and the correction factor are shown in Table 2, for the functional groups in the present disclosure. The molar absorption coefficients were determined from the FT-IR measurement data of small molecular model compounds.

[Table 2]

**Table 2**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Number of particles)

In a clean booth of class 100, each of the tubes prepared in Examples and Comparative Examples were cut to 0.5 m to thereby prepare a tube A.

For measurement, the system 9 shown in Figure 4 and commercially available high purity isopropyl alcohol (IPA) were used. An in-line filter manufactured by KITZ MICRO FILTER CORPORATION (NHM Series, filtration accuracy 3 nm) was used as the filter 94. A liquid-borne particle sensor by the light scattering method, KS-19F, manufactured by RION CO., LTD. was used as a particle counter.

It was confirmed using the particle counter in advance that the number of particles having a diameter of 30 nm or more released from the measurement line into the IPA was 10 or less per mL.

After connecting the tube A to the joints 95 and 96 of the system 9 shown in Fig. 4, IPA was allowed to flow into the tube A at a flow rate of 10 mL/min for 10 minutes to wash the inner surface of the tube A. It was confirmed that the number of particles in the IPA used for washing reached 10 or less per mL.

Next, the pump 92 was stopped, and the tube A was allowed to stand for 6 hours in a state where the tube A was filled with IPA.

Feed of IPA into the tube A was resumed, and IPA was allowed to flow into the tube A at a flow rate of 110 mL/min. A portion of the IPA that had passed through the tube A was introduced into the liquid-borne particle sensor by the light scattering method (particle counter) at a flow rate of 10 mL/min to measure the number of particles in the IPA. The number of particles dropped to the blank level in about 10 minutes, but the measurement was continued for 16 minutes. The interval of measurements was set to 2 seconds, and the number of particles was measured 15 times in total. Each of the found values (particles/mL) for 15 times was multiplied by 110, and the products were integrated. The integrated value was divided by the area of the inner surface of the tube A to calculate the number of particles released from the tube A into the IPA (particles/cm$^2$).

(Amount of TOC eluted)

A measurement line for measuring the amount of TOC eluted was assembled by connecting, via piping, a filter (Polyfix F50 series (F50 C50TP-C2), manufactured by KITZ MICRO FILTER CORPORATION; filtration accuracy for fine particles, 5 nm), a flow meter (differential pressure type flow controller (Z900M-1/4-09-AN531S), manufactured by Surpass Industry Co., Ltd.), and a TOC meter (TAC-ACCURA-R, manufactured by T&C Technical, ultraviolet oxidative decomposition/electroconductivity method) .

The flow rate of the ultrapure water flowing through the flow meter was set to 110 mL/min, and the flow rate of the ultrapure water flowing through the TOC measurement cell of the TOC meter was set to 20 mL/min. The remaining ultrapure water which was not introduced into the TOC meter, was drained from another pipe. Ultrapure water was continuously allowed to flow for 1 hour, and it was confirmed that the TOC value was 1 ppb or less.

The tube prepared in any of Examples and Comparative Example was cut to a length of 1 m and set between the filter and the flow meter in the measurement line.

The TOC value was continuously measured at intervals of 5 seconds, and the amount (ng) of TOC eluted was calculated from the peak area for 5 minutes after the peak was detected. The calculated value was multiplied by 110/20 and further divided by the area of the inner surface of the tube (124 cm$^2$) to obtain the amount of TOC eluted (ng/cm$^2$).

(Amount of potassium, sodium, and iron eluted)

The tube prepared in any of Examples and Comparative Example was cut to a length of 150 cm, and the resulting tube was then folded into a U-shape and secured with a tie band. 15 mL of a high purity 1N aqueous nitric acid solution was introduced into the tube, and left stand for 3 days. Thereafter, the amount of metals in the resulting aqueous nitric acid solution was measured using an inductively coupled plasma mass spectrometer. The found value (ng/mL) was multiplied by the amount of the nitric acid used to calculate the amount (ng) of metal eluted, and the calculated value was divided by the contact area between the inner surface of the tube and the nitric acid to thereby obtain the amount (ng/cm$^2$) of potassium, sodium, and iron eluted with the aqueous nitric acid solution.

(Metal content measured by ashing method)

The measurement was carried out by the ashing method disclosed in WO94/28394. The tube prepared in any of Examples and Comparative Example was cut to a length of about 5 cm, and the resulting tube was washed with a high purity 1N aqueous nitric acid solution and then shaved. The shaved product was weighed in a range of 2 to 6 mg, and heated in a graphite-made cuvette at 1100°C for 180 seconds to be ashed. The resulting ash was analyzed by an atomic absorption spectrophotometer (polarized Zeeman atomic absorption spectrophotometer (Z-8100), manufactured by Hitachi, Ltd).

(Surface roughness Ra of inner surface of tube)

For each of the tubes prepared in Examples and Comparative Example, the topographic image of the inner surface thereof under an atomic force microscope (AFM) was subjected to automatic tilt correction, and thus the surface roughness Ra of the inner surface of the tube was calculated.

The surface roughness Ra is an averaged value (arithmetical mean roughness) obtained in the following manner: from the roughness profile, a portion with a sampling length L in the direction of the average line of the roughness profile was extracted; the absolute values of deviation from the average line to the measurement profile were totaled in the extracted portion; and the total was averaged. The calculation formula of the surface roughness Ra is as shown below, wherein the roughness profile is represented by y=f(x), the x-axis is taken in the direction of the average line of the extracted portion, and the y-axis is taken in the direction of the vertical magnification.

数1

$$Ra = \frac{1}{L}\int_0^L |f(x)|dx$$

Example 1

Pellets of a TFE/PPVE copolymer (TFE/PPVE=94.5/5.5 (mass%), MFR=2 (g/10 min), melting point=303 (°C)) were prepared in the same manner as in Example 1 in WO2019/187859, except that the amount of monomers used and others were changed.

The resulting pellets were heated to 200°C and brought into contact with a mixed gas containing nitrogen gas and fluorine gas (fluorine gas concentration=30 vol%). The number of $-CF=CF_2$, $-CF_2H$, $-COF$, $-COOH$, $-COOCH_3$, $-CONH_2$ and $-CH_2OH$ contained in the copolymer in the resulting pellets was 5 or less in total, per $10^6$ carbon atoms.

A 1/4 inch tube having an outer diameter of 6.35 mm and an inner diameter of 3.95 mm was produced from the resulting pellets using the system for producing tubes shown in FIG. 2. Extrusion was carried out at a drawing speed of 0.4 m/min using an extruder (diameter of cylinder shaft: 30 mm, L/D=22). The thickness of the tube was adjusted by setting the screw speed of the extruder to 4.2 rpm and the drawing speed to 41 cm/min. The temperatures of the cylinders (C1, C2, C3), the adapter (A), the die head (D1), and the die tip (D2) of the extruder were set to 330 to 360°C. The temperature of the copolymer at the die tip (the temperature of the copolymer at the extrusion port of the mold) was 360°C.

An organic matter-removing filter (in-line filter filled with activated carbon with a specific surface area of about 1200 ($m^2$/g)) and a fine particle-removing filter (in-line filter, manufactured by KITZ MICRO FILTER CORPORATION (NHM Series; filtration accuracy for fine particles, 3 nm)) were connected in series. Air was allowed to pass through the organic matter-removing filter and the fine particle-removing filter in this order, and then the resulting air was fed into the tube from the head end thereof.

The flow rate of the air was adjusted using a needle valve, and the feed of the air was continued at a flow rate such that the pressure in the tube was higher than the atmospheric pressure and also that the copolymer in a molten state extruded from the die of the extruder was not deformed. The resulting tube was melt-sealed at two arbitrary point therein using a handheld sealer equipped with a heating plate manufactured by EIKOU ELECTRIC Co., Ltd., to obtain a tube with both ends thereof sealed. The results are shown in Table 3.

Example 2

A tube with both ends thereof sealed was obtained in the same manner as in Example 1, except that the temperature of the cylinder, the adapter, the die head, and the die tip of the extruder were changed to adjust the temperature of the copolymer at the extrusion port of the mold to 380°C. The results are shown in Table 3.

Comparative Examples 1 to 6

A tube with both ends thereof sealed was obtained in the same manner as in Example 1, except that the conditions of production of the tube were changed as described in Table 3. The results are shown in Table 3.

The direction of air fed from the head end of the tube toward the mold as conducted in Example 1 is designated as "Back flow" in Table 3. The direction of air fed from the mold toward the head end of the tube (the reverse direction to the feed direction in Example 1) is designated as "Forward flow" in Table 3. Also in a case where air was fed from the mold toward the head end of the tube, air that had been allowed to pass through the organic matter-removing filter and then the fine particle-removing filter was fed into the tube.

[Table 3]

Table 3

| | | Comparative Example | | | | | | Example | |
|---|---|---|---|---|---|---|---|---|---|
| | | 1 | 2 | 3 | 4 | 5 | 6 | 1 | 2 |
| Temperature of copolymer at extrusion cort of mold °C | °C | 360 | 360 | 360 | 360 | 360 | 400 | 360 | 380 |
| Direction of gas flowing through hollow | | Forward flow | Forward flow | Back flow | Back flow | Back flow | Back flow | Back flow | Back flow |
| Fine particle-removing filter | | No | Yes | No | Yes | No | Yes | Yes | Yes |
| Organic matter-removing filter | | No | Yes | No | No | Yes | Yes | Yes | Yes |
| Number of particles | particles/cm$^2$ | 29267 | 4204 | 23414 | 6208 | 16851 | 1450 | 1650 | 3104 |
| Amount of TOC eluted | ng/cm$^2$ | Not determined | Not determined | Not determined | 161 | Not determined | Not determined | 26 | 47 |
| Amount of potassium, sodium, and iron eluted | ng/cm$^2$ | Not determined | 1.02 | Not determined | Not determined | Not determined | Not determined | 0.26 | 0.42 |
| Metal content measured by ashing method ng/1g | ng/1g | 50 | 45 | Not determined | Not determined | Not determined | 56 | 22 | 36 |
| Surface roughness Ra of inner surface | nm | 2.8 | 2.8 | Not determined | Not determined | Not determined | 3.0 | 2.8 | 2.9 |

REFERENCE SIGNS LIST

| 1 | tube |
| 2 | hollow |
| 100 | tube-producing system |
| 10 | extruder |
| 20 | mold |
| 30 | back-flow prevention device |
| 40 | sizing die |
| 50 | cooling device (cooling water pool) |
| 60 | drawing machine |
| 70 | winding device |
| 71 | lead tube |
| 73a | organic matter-removing filter |
| 73b | fine particle-removing filter |
| 80 | gas-feeding device |
| 9 | system |
| 91 | container for medium |
| 92 | pump |
| 93 | valve |
| 94 | filter |
| 95, 96 | joint |
| 97 | particle counter |
| 98, 99 | flow meter |

**Claims**

1.  A tube comprising a tetrafluoroethylene/fluoroalkyl vinyl ether copolymer, wherein

    the copolymer has 500 or less functional groups per $10^6$ carbon atoms;
    the copolymer has a melting point of 280 to 315°C;
    the copolymer has a fluoroalkyl vinyl ether unit content of 3.0 to 12.0 mass% based on total monomer units;
    the copolymer has a melt flow rate of 1 to 15 g/10 minutes;
    the tube releases, from an inner surface thereof, 3500 or less particles per 1 cm$^2$ of the inner surface of the tube; and
    an amount of total organic carbon eluted with water from the inner surface of the tube is 50 ng or less per 1 cm$^2$ of the inner surface of the tube.

2.  The tube according to claim 1, wherein the copolymer has a fluoroalkyl vinyl ether unit content of 3.5 to 8.0 mass% based on total monomer units.

3.  The tube according to claim 1 or 2, wherein the copolymer has 100 or less functional groups per $10^6$ carbon atoms.

4.  The tube according to any one of claims 1 to 3, wherein an amount of potassium, sodium, and iron eluted with an aqueous nitric acid solution from the inner surface of the tube is 0.50 ng or less per 1 cm$^2$ of the inner surface of the tube.

5.  The tube according to any one of claims 1 to 4, wherein the tube has a metal content of 40 ng/g or less, as measured by an ashing method.

6.  The tube according to any one of claims 1 to 5, wherein the inner surface of the tube has a surface roughness Ra of 5.0 nm or less.

7.  The tube according to any one of claims 1 to 6, wherein both ends of the tube are melt-sealed.

8.  A method for producing a tube, comprising: subjecting a copolymer to fluorination treatment; and then extrusion

**EP 4 585 637 A1**

forming the copolymer subjected to the fluorination treatment using an extruder, wherein

the copolymer is a tetrafluoroethylene/fluoroalkyl vinyl ether copolymer;
the copolymer has a melting point of 280 to 315°C;
the copolymer has a fluoroalkyl vinyl ether unit content of 3.0 to 12.0 mass% based on total monomer units;
the copolymer has a melt flow rate of 1 to 15 g/10 minutes;
the copolymer when extruded from a mold of the extruder has a temperature of 390°C or less; and
in the extrusion forming, a gas is allowed to flow in the tube from a head end of the tube, wherein the gas has passed through an organic matter-removing filter and then through a fine particle-removing filter.

9. The method according to claim 8, wherein a column filled with active carbon is used as the organic matter-removing filter, wherein the active carbon has a specific surface area of 400 $m^2$/g or more as measured by a BET method.

10. The method according to claim 8 or 9, wherein the fine particle-removing filter has a filtration accuracy for fine particles of 10 nm or less.

Figure 1

Figure 2

Figure 3

Figure 4

## INTERNATIONAL SEARCH REPORT

| International application No. |
|---|
| **PCT/JP2023/032680** |

| A. | CLASSIFICATION OF SUBJECT MATTER |
|---|---|

*C08J 5/00*(2006.01)i; *B29C 48/09*(2019.01)i; *F16L 11/06*(2006.01)i; *B29K 27/12*(2006.01)n; *B29L 23/00*(2006.01)n
FI: C08J5/00 CEW; B29C48/09; F16L11/06; B29K27:12; B29L23:00

According to International Patent Classification (IPC) or to both national classification and IPC

| B. | FIELDS SEARCHED |
|---|---|

Minimum documentation searched (classification system followed by classification symbols)

C08J5/00; B29C48/00-48/96; F16L11/00-11/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/059501 A1 (DAIKIN INDUSTRIES, LTD.) 24 March 2022 (2022-03-24) claims, paragraphs [0004], [0025]-[0027], [0043], [0046]-[0052], [0067], [0077], [0079], [0083], [0085]-[0087], [0095], examples | 1-3, 6-10 |
| Y | | 4, 5 |
| Y | WO 2021/033539 A1 (DAIKIN INDUSTRIES, LTD.) 25 February 2021 (2021-02-25) claims, paragraphs [0004], [0023], [0041], examples | 4 |
| Y | WO 2019/187859 A1 (DAIKIN INDUSTRIES, LTD.) 03 October 2019 (2019-10-03) claims, paragraphs [0012], [0056], [0057], [0079], examples | 5 |
| A | JP 2000-233435 A (NICHIAS CORP.) 29 August 2000 (2000-08-29) entire text | 1-10 |
| A | JP 2019-6983 A (CHEMOURS-MITSUI FLUOROPRODUCTS CO., LTD.) 17 January 2019 (2019-01-17) entire text | 1-10 |
| A | WO 2020/004083 A1 (DAIKIN INDUSTRIES, LTD.) 02 January 2020 (2020-01-02) entire text | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/032680**

| Patent document cited in search report | | | Publication date (day/month/year) | Patent family member(s) | | | Publication date (day/month/year) |
|---|---|---|---|---|---|---|---|
| WO | 2022/059501 | A1 | 24 March 2022 | US | 2023/0202088 | A1 | |
| | | | | claims, paragraphs [0030]-[0032], [0048]-[0057], [0082]-[0092], [0104], examples | | | |
| | | | | CN | 116096548 | A | |
| | | | | KR | 10-2023-0051686 | A | |
| | | | | TW | 202222536 | A | |
| WO | 2021/033539 | A1 | 25 February 2021 | US | 2022/0170573 | A1 | |
| | | | | claims, examples | | | |
| | | | | EP | 4019820 | A1 | |
| | | | | CN | 114206583 | A | |
| | | | | KR | 10-2022-0041140 | A | |
| | | | | TW | 202115134 | A | |
| WO | 2019/187859 | A1 | 03 October 2019 | US | 2021/0008775 | A1 | |
| | | | | claims, examples | | | |
| | | | | EP | 3778760 | A1 | |
| | | | | KR | 10-2020-0125674 | A | |
| | | | | CN | 111936572 | A | |
| | | | | TW | 201942148 | A | |
| JP | 2000-233435 | A | 29 August 2000 | (Family: none) | | | |
| JP | 2019-6983 | A | 17 January 2019 | US | 2020/0139604 | A1 | |
| | | | | WO | 2018/237297 | A1 | |
| | | | | EP | 3642251 | A1 | |
| | | | | CN | 110785446 | A | |
| | | | | KR | 10-2020-0020701 | A | |
| WO | 2020/004083 | A1 | 02 January 2020 | US | 2021/0269568 | A1 | |
| | | | | EP | 3816214 | A1 | |
| | | | | CN | 112313271 | A | |
| | | | | KR | 10-2021-0021568 | A | |
| | | | | TW | 202012518 | A | |

Form PCT/ISA/210 (patent family annex) (January 2015)

**EP 4 585 637 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000233435 A
- WO 2022059501 A
- WO 9428394 A
- WO 2019187859 A